# DEMANDE DE BREVET EUROPEEN

(11) **EP 2 420 795 A1**
(43) Date de publication de la demande: **22.02.2012**
(21) Numéro de dépôt: 11358008.8
(22) Date de dépôt: 17.08.2011
(51) Int. Cl.: G01B 3/56

(54) **Equerre rapporteuse d'angle**

(30) Priorité: 17.08.2010 FR 1003384
(71) Demandeur: Vaidis, Julien, 13109 Simiane Collongue (FR)
(72) Inventeur: Vaidis, Julien, 13109 Simiane Collongue (FR)

(57) **Abrégé**

L'équerre rapporteuse d'angles est un dispositif pour le traçage et entaillage sur pièces de bois ou autres matériaux.

L'invention consiste en un dispositif de grande taille possédant un guide indéréglable, permettant de tracer deux coupes complémentaires (niveau et aplomb) en fonction d'un angle, en une seule manipulation, rendant le traçage très précis.

L'équerre est composée d'un corps principal (1) en triangle rectangle, de deux évidements (4 et 8), d'une fente curviligne (3) et d'une échelle à graduation angulaire (5). Un tourillon (6) assure les rotations sur le corps (1), du bras (2) qui est composé de deux éléments se situant de part et d'autre du corps (1). Après le réglage de l'angle, le bras (2) est bloqué par un organe de verrouillage coulissant (22) et sert de guide de butée pour tracer les coupes et entailles.

L'équerre est particulièrement destinée aux domaines de la charpente et de la menuiserie.

## Description

L'invention porte sur une équerre rapporteuse d'angle qui donne une coupe de niveau et une coupe d'aplomb en fonction d'un angle. Elle peut être utilisée en charpente du fait de sa grande dimension et en menuiserie pour tracer les escaliers. L'équerre peut également servir de gabarit d'usinage pour entailler les marches de niveau et les contremarches d'aplomb. Et de manière générale, elle peut servir à tout métier manuel ayant besoin de définir des angles complémentaires (maçonnerie, miroiterie, métallurgie...).

Voici les différentes situations et techniques antérieures, selon le domaine d'application :
Lors de la conception d'une charpente, la pente du toit est définie par la région, le type de couverture ou par les toitures des alentours. Cela donne une multitude de pentes variables qui peuvent aller de 1 à plus de 60 degrés.

Dans n'importe quelle inclinaison de toiture, les charpentiers ont comme référence la coupe horizontale dite « de niveau » et la coupe verticale dite « d'aplomb ». Ces coupes se retrouvent à plusieurs endroits dans une charpente comme les chevrons, les arêtiers, les noues et les différentes pièces qui composent une ferme.

Une pente de toit est donnée en %, exemple :
Une pente de 30% signifie que pour une longueur de 1m (correspondant au « niveau »), l'extrémité se situe à une altitude de 0,3m (correspondant à « l'aplomb »). C'est comme cela qu'on détermine les angles de niveau et d'aplomb.

Lors de la conception d'un escalier, l'inclinaison est définie par une hauteur à monter, une longueur de recul et par la formule de blondel (2h+g= 60 à 64). Chaque escalier étant unique car il est ajusté avec ces paramètres, il existe une grand possibilité de conception avec ou sans quart tournant, droit, à pas japonais ...

Pour exécuter les entailles des marches (de niveau) et contremarches (d'aplomb) dans les limons cela demande un gabarit unique fait sur mesure.

Que ce soit dans le domaine de la charpente ou de la menuiserie, ce travail est traditionnellement effectué à l'aide d'équerres ou de fausses équerres :
Les fausses équerres sont constituées d'un manche et d'une règle qui pivote sur un axe. Ce système est facile à régler mais l'inconvénient est qu'il se dérègle aussi facilement. Généralement ces fausses équerres ont un petit manche qui sert de guide pour le traçage, ce qui donne rapidement un manque de précision en charpente. De plus, il faut utiliser deux fausses équerres, l'une pour l'angle de niveau et l'autre pour l'angle d'aplomb, ce qui complique la manipulation et limite la précision.

Les différentes équerres avec graduation ou avec un guide réglable sont généralement petites et manquent donc de précision au traçage sur des pièces de grosse section.

L'équerre alpha est une équerre avec un rapporteur qui permet d'obtenir une coupe d'aplomb et une coupe de niveau en fonction d'un angle. L'inconvénient est qu'elle ne possède pas de guide de butée.

L'objet de la présente invention consiste en une équerre d'un nouveau type, qui soit d'une utilisation universelle et aisée pour le traçage de charpente mais également le traçage et entaillage de limons d'escaliers.

L'invention vise une équerre de ce type qui permet de régler n'importe quel angle sur l'équerre pour obtenir deux angles de coupes : la coupe de niveau et la coupe d'aplomb. De plus, pour éviter tout dérèglement le bras ne dépasse pas du corps principal.

Pour la partie charpente, ces coupes sont les principales utilisées. Dû à sa grande dimension, l'équerre permet un travail plus confortable comme le traçage d'un seul trait sur des pièces de grosse section. Le fait d'avoir un long guide en guise de butée favorise la précision car les arrêtes des pièces de bois sont irrégulières.

Pour la partie escalier en menuiserie, l'atout de cette équerre est la précision. En effet, le corps principal est une équerre ce qui garantit l'équerrage entre les marches et contremarches. L'avantage est qu'elle peut également servir de gabarit d'usinage. Elle est réutilisable car son angle ajustable s'adapte à n'importe quel escalier.

Un autre objet de l'invention consiste à fournir une telle équerre, qui soit facile à utiliser, d'une fabrication simple et relativement économique, tout en étant d'une réalisation robuste et durable.

L'invention va à présent être décrite plus en détails à titre d'exemple nullement limitatifs en regard des dessins annexés sur lesquels :
La figure 1 représente une vue de face de l'équerre.
La figure 2 représente une vue arrière de l'équerre.
La figure 3 représente une vue de côté de l'équerre.
La figure 4 représente une vue de dessus de l'équerre.
La figure 5 représente en coupe le détail de l'organe coulissant de verrouillage.
La figure 6 représente une vue éclatée en perspective de l'équerre.
La figure 7 illustre la position de l'équerre pour le traçage d'une coupe de niveau inférieure à 45 degrés.
La figure 8 illustre la position de l'équerre pour le traçage d'une coupe d'aplomb supérieure à 45 degrés.
La figure 9 illustre la position de l'équerre pour le traçage d'une coupe de niveau supérieure à 45 degrés.
La figure 10 illustre la position de l'équerre pour le traçage d'une coupe d'aplomb inférieure à 45 degrés.

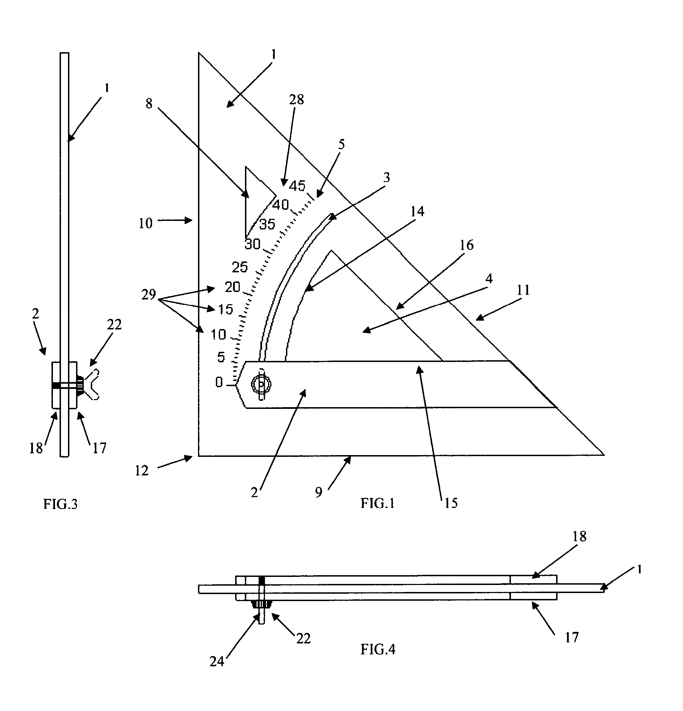

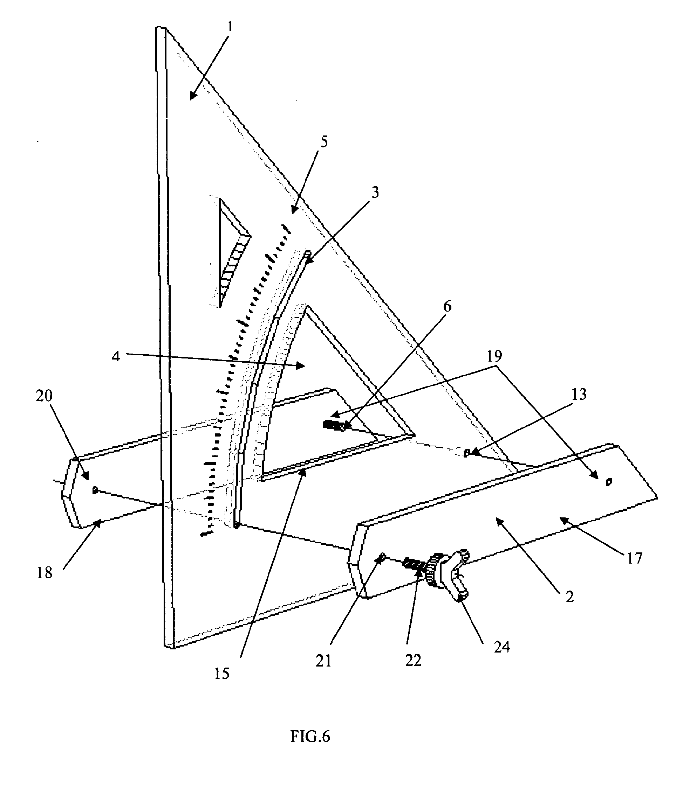

Comme le révèle les figures 1 à 10 des dessins annexés, l'équerre conforme à la présente invention comprend un corps monobloc désigné globalement par la référence numérique (1) et présente une configuration en triangle rectangle, un bras rapporteur allongé repéré globalement par l'indice (2), un pivot (6) et un organe coulissant de verrouillage indiqué globalement par la référence (22).

La configuration en triangle rectangle du corps plan (1) est délimitée par un premier côté (9) et un deuxième côté (10) se rencontrant à angle droit en un point (12), ainsi que par un troisième côté (11) reliant les extrémités opposées de ces deux cotés en deux points (31) et (35). Un trou (13) de passage du pivot est pratiqué à distance du premier côté (9) le long du troisième côté (11) vers l'intérieur par rapport à l'arrête de ce troisième côté (11). Une fente (3) à courbure convexe est ménagée dans le corps (1) au voisinage du deuxième côté (10) et est déterminée par un rayon dont le point d'origine est formé par le trou (13).

Un évidement désigné globalement par (4), se trouve entre le trou (13) et la fente curviligne (3). Cet évidement comprend un côté courbe (14) au voisinage de la fente curviligne (3), et deux autres côtés rectilignes (15) et (16) qui partent des extrémités de ce côté courbe et se rencontrent en formant un angle à 45 degrés au voisinage dudit trou (13).

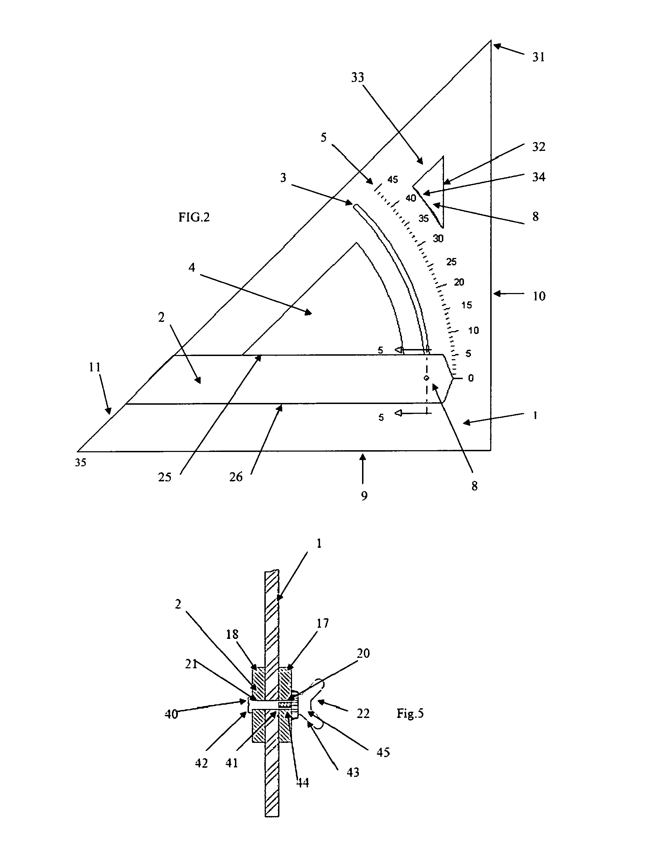

Un deuxième évidement désigné globalement par (8), comprend un côté courbe (34) au voisinage de l'échelle (5), étant délimité par un rayon dont le point d'origine est formé par le trou (13) et deux autres côtés rectilignes (32) et (33) qui partent des extrémités de ce côté courbe et se rencontrent en formant un angle à 45 degrés au voisinage de l'angle (31), ce dernier se formant à l'intersection entre le deuxième côté (10) et le troisième côté (11) et formant un angle de 45 degrés. Le bras rapporteur (2) se compose de deux éléments allongés (17) et (18) dont chacun présente une face externe plane, et une épaisseur égale ou supérieure à celle du corps (1), de manière à offrir une surface de butée stable permettant le positionnement contre l'arrête d'une pièce de bois. Une cavité (19) est façonnée dans la région de l'extrémité desdits éléments recouvrant le trou (13) de passage du pivot, cette cavité étant alignée avec le pivot ou tourillon (6), et logeant ce dernier. Comme illustré dans la figure 5, des trous (20) et (21), percés respectivement dans les éléments (17) et (18) et alignés avec la fente curviligne (3), reçoivent un organe coulissant de verrouillage (22) constitués de deux éléments : un premier élément (40) correspondant à une tige taraudée en extrémité (41) avec une tête proéminente (42), et un second élément (45) composé d'une tête papillon (43) et d'une tige filetée en extrémité (44) venant se loger dans la partie taraudée (41) de la pièce (40), ce qui assure le verrouillage.

Lorsque l'organe de fixation (22) est serré, il plaque fermement les deux éléments (17) et (18) contre la surface opposées du corps (1) afin de bloquer, par friction, le bras rapporteur (2) dans une position fixe.

Comme le montrent les figures 1 et 2, l'arrête longitudinale supérieure (25) du bras rapporteur (2) s'étend le long de l'évidement (4) aligné au côté rectiligne (15) et en travers de la fente curviligne (3) au dessus de son extrémité inférieure. L'arrête longitudinale inférieure (26) de ce bras est sous-jacente audit côté rectiligne et à ladite extrémité inférieure. L'arrête (26) de ce bras sert de guide de butée pour le traçage. Ledit bras présente une longueur telle que l'extrémité en pointe (27) au voisinage du trou (20), indique la valeur de l'angle sur une échelle graduée, portant globalement la référence (5).

Cette échelle (5) se situe entre la fente curviligne (3) et l'évidement (8), et comprend des graduations linéaires (28) aux valeurs numériques (29) couvrant un angle de 0 à 45 degrés selon des progressions de 5. Lorsqu'un pivot est imprimé au bras rapporteur (2), la pointe (27) en extrémité indique l'angle sur les valeurs numériques (29). La vis coulissante de verrouillage (22) est ensuite bloquée pour verrouiller le bras rapporteur (2) dans cette position.

Dans la forme de réalisation illustrée, l'unité de graduation figurant sur l'échelle (5) est exprimée en degré. Le repère zéro est une ligne passant par l'axe du trou (13) et parallèle au premier côté (9). Le repère quarante cinq est une ligne passant par l'axe du trou (13) et parallèle au troisième côté (11).

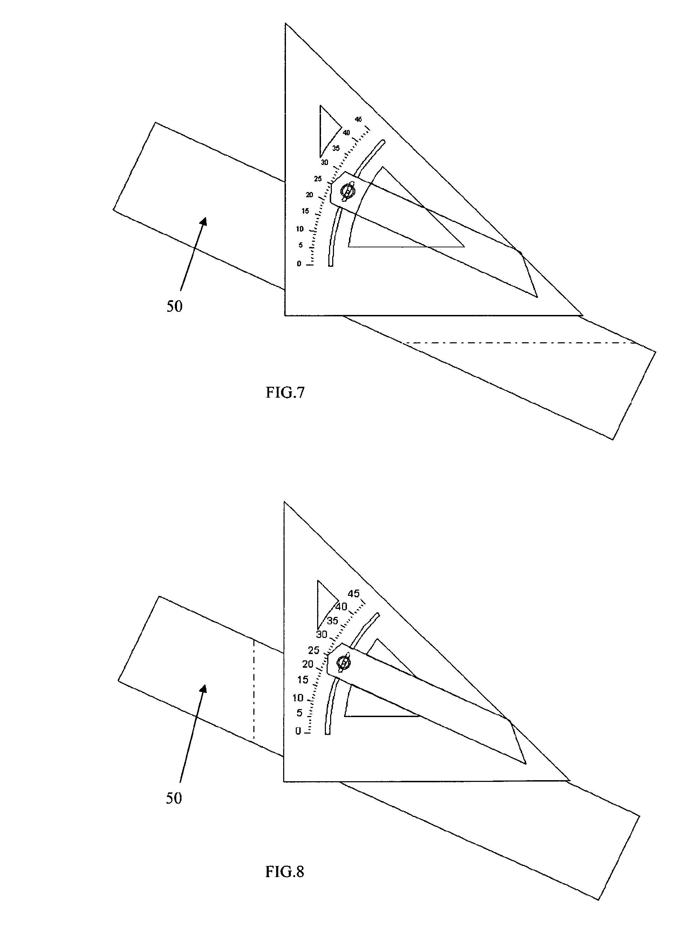

Fonctionnement de l'équerre rapporteuse d'angles pour le traçage d'angles compris entre 0 à 45 degrés:
Comme illustre la figure 7, pour le traçage d'une coupe de niveau, l'équerre est placée sur une pièce de bois (50) en maintenant fermement l'arête inférieure (26) du bras rapporteur (2) contre le bord supérieur de cette pièce (50). Un crayon (non représenté) est ensuite promené le long du premier côté (9) afin de tracer la ligne de coupe en travers de la pièce (50).
Comme illustre la figure 8, pour tracer la coupe d'aplomb complémentaire (qui est donc supérieure à 45 degrés), l'équerre est placée sur une pièce de bois (50) en maintenant fermement l'arrête inférieure (26) du bras rapporteur (2) contre le bord supérieur de cette pièce (50). Le traçage de la coupe s'effectue alors le long du deuxième côté (10) en travers de la pièce (50).

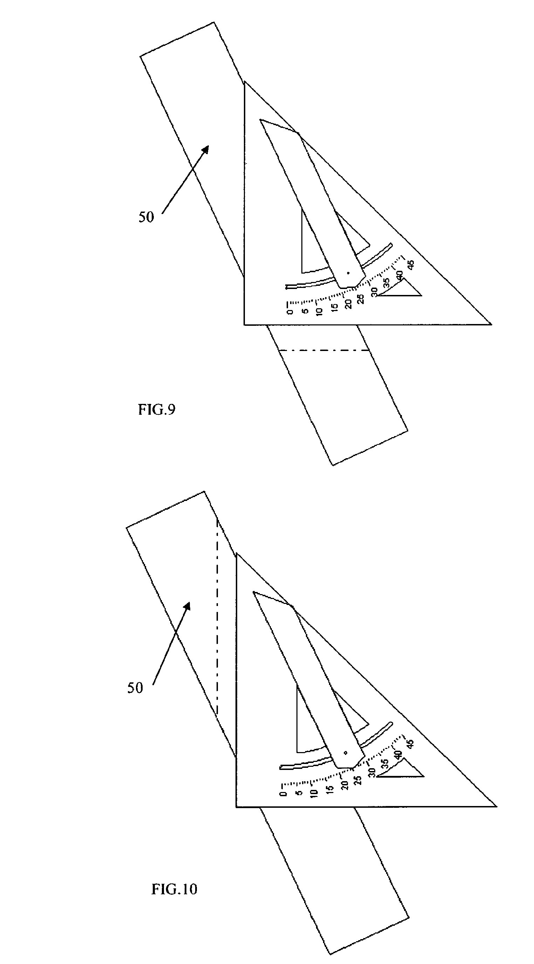

Fonctionnement de l'équerre rapporteuse d'angles pour le traçage d'angles compris entre 45 et 90 degrés :
Comme illustre la figure 9, pour tracer une coupe de niveau, il suffit de retourner l'Équerre V10 et de la placer sur une pièce de bois (50) en maintenant fermement l'arrête inférieure (26) du bras rapporteur (2) contre le bord supérieur de cette pièce (50). Le traçage de la coupe s'effectue le long du deuxième côté (10) en travers de la pièce (50).
Comme illustre la figure 10, pour le traçage de la coupe d'aplomb complémentaire, il suffit de retourner l'équerre est de la placer sur une pièce de bois (50) en maintenant fermement l'arête inférieure (26) du bras rapporteur (2) contre le bord supérieur de cette pièce (50). Le traçage de la coupe s'effectue alors le long du premier côté (9) en travers de la pièce (50).

Fonctionnement de l'équerre rapporteuse d'angles en gabarit d'usinage :
Le procédé est le même que pour le traçage sauf que l'équerre est située à une distance du traçage qui correspond à la distance entre le guide et l'outil de la machine utilisée. L'entaillage s'effectue après un traçage précis et soigneux des pièces tracées comme les marches et contremarches.
L'équerre est maintenue en place à l'aide de serre-joint, presse ou vis...

On fera observer que l'équerre peut aussi être utilisée pour tracer des lignes de coupe obliques, en sélectionnant l'angle souhaité sur l'échelle et en ajustant le bras rapporteur (2) sur le repère.

Lorsqu'on utilise l'équerre pour tracer des angles égaux ou inférieurs à 45 degrés, un pivot est imprimé à l'extrémité (27) du bras rapporteur (2) jusqu'à la graduation souhaitée sur l'échelle (5). En fonction de la direction souhaitée de la coupe oblique, la face inférieure (26) du bras (2) est placée contre la pièce d'oeuvre, le trait étant tracé le long du premier côté (9).

La graduation de l'échelle (5) ne dépasse pas 45 degrés car les angles sont complémentaires. A titre d'exemple, pour un angle imprimé de 20 degrés entre le bras (2) et le premier côté (9), l'angle opposé obtenu entre le bras (2) et le deuxième côté (10) sera de 70°.

La somme des angles d'un triangle étant égale à 180 degrés, seul l'angle droit (14) est constant car il se situe à l'intersection des côtés (9) et (10). Donc pour un angle imprimé de 20 degrés, l'angle sera de 70 degrés.

Tableau de valeurs:
180 - 90 - α = β

| | | | | | | | | | |
|---|---|---|---|---|---|---|---|---|---|
| Angle imprimé (α) | 5 | 10 | 15 | 20 | 25 | 30 | 35 | 40 | 45 |
| Angle complémentaire (β) | 85 | 80 | 75 | 70 | 65 | 60 | 55 | 50 | 45 |

Cela permet d'obtenir tous les angles compris en 0° et 90°.

L'Équerre et le bras rapporteur peuvent être fabriqués dans tout matériau stable et durable comme l'aluminium, les résines synthétiques armées de fibres telles que les polyamides, les polyacétates, et les oxydes de polyphénylène. L'on préférera l'aluminium, du fait qu'il confère une bonne harmonie entre la robustesse, la stabilité et le poids modeste.

Les éléments constitutifs du bras auront une surface marginale relativement épaisse pour permettre un positionnement stable contre les faces latérales des pièces de bois devant être coupées.

Ainsi, il apparaîtra aisément que l'équerre rapporteuse d'angles selon la présente invention est d'une utilisation universelle et facile, permettant d'effectuer diverses coupes de charpente, traçages et entailles d'escaliers moyennant un minimum de calcul. Elle constitue un moyen simple, mais efficace pour déterminer et tracer des coupes obliques ou entailles à partir d'angles, et elle permet également de tracer des coupes ou des entailles selon des angles souhaités, à d'autres fins. Elle est d'une fabrication simple et robuste garantissant un usage fiable dans le temps.

Il va de soi que de nombreuses modifications peuvent être apportées à l'équerre rapporteuse d'angles décrite et représentée, sans sortir du cadre de l'invention.

À titre d'exemple non limitatif, l'équerre rapporteuse d'angles aura des dimensions de l'ordre de 60 cm de coté.

Le dispositif selon l'invention est particulièrement destinée aux traçages et entaillages de différentes pièces dans les domaines de la charpente et de la menuiserie.

## Revendications

1. L'équerre rapporteuse d'angle, **caractérisée en ce qu'**elle comprend :
A. Un corps monobloc (1) de configuration en triangle rectangle, comprenant des premier (9) et deuxième (10) côtés se rencontrant à angle droit (12), ainsi qu'un troisième côté (11) reliant les extrémités opposées de ces deux côtés, ce corps étant percé d'un trou (13) de passage d'un pivot, pratiqué le long du troisième côté (11) à distance du point d'intersection précité et situé vers l'intérieur à partir de ce troisième côté, ledit corps (1) présente une fente (3) à courbure convexe espacée du point (12) de rencontre à angle droit desdits premier (9) et deuxième (10) côté et délimitée par un rayon dont le point d'origine est formé par ledit trou de passage du pivot, l'origine de cette fente curviligne (3) étant d'avantage rapprochée dudit deuxième coté (10) que ledit trou (13), le corps (1) présentant également un évidement (4) dont un côté est courbe, qui est intercalé entre ladite fente curviligne (3) et ledit trou (13) de passage du pivot et comprend un côté courbe (14) au voisinage de ladite fente curviligne (3), ainsi que deux cotés rectilignes(15,16) se rencontrant au voisinage dudit trou (13), ledit côté courbe (14) étant délimité par un rayon dont le point d'origine est formé par ledit trou (13), ledit corps (1) comprenant une échelle (5) à graduation angulaire (28) espacée vers l'extérieur de la fente curviligne (3), le corps (1) présentant également un évidement (8) dont un côté est courbe, qui est intercalé entre échelle (5) et le point (31) de rencontre desdits deuxième (10) et troisième (11) côté et délimitée par un rayon dont le point d'origine est formé par ledit trou de passage du pivot et comprend un côté courbe (34) au voisinage de ladite échelle (5), ainsi que deux cotés rectilignes (32,33) se rencontrant au voisinage dudit point (31) ;
B. Un bras rapporteur (2) comprenant deux éléments allongés (17,18) s'étendant le long des faces opposées du corps (1) et recouvrant le trou (13) de passage du pivot et la fente curviligne (3) jusqu'à l'échelle (5) dont la pointe d'extrémité (27) au voisinage du trou (20) y indique la valeur de l'angle ;
C. Un pivot (6), logé dans les éléments (17,18) constituant le bras et franchissant le trou de passage (13) ;
D. Un organe coulissant de verrouillage (22), installé dans les éléments (17 ,18) constitutifs du bras et pouvant coulisser dans la fente curviligne (3), cet organe coulissant de verrouillage plaque par coincement lesdits éléments (17,18) contre les faces opposées du corps (1) et pouvant être manipulé pour inhiber ledit coincement afin d'autoriser un mouvement dudit bras (2) jusqu'à une graduation choisi de ladite échelle (5), l'arête longitudinale (26) de ce bras rapporteur (2) adjacente audit premier côté (9) dudit corps (1) pouvant être placée contre le bord supérieur de la pièce de bois (50) devant être coupé ou entaillé et ledit premier côté (9) dudit corps (1) permettant alors de tracer le trait de repérage d'une coupe ou d'une entaille horizontale, et le deuxième côté (10) permettant alors de tracer le trait de repérage d'une coupe ou d'une entaille verticale.

2. Équerre selon la revendication 1, **caractérisée en ce que** le moyen de coincement est composé d'un premier élément (40) taraudé et d'un second élément (45) fileté, se logeant dans les trous (20) et (21) pratiqués dans les pièces (17) et (18).

3. Équerre selon la revendication 2, **caractérisée en ce que** l'élément de fixation comprend un premier élément (40) correspondant à une tige taraudée en extrémité (41) avec une tête proéminente (42), et un second élément (45) composé d'une tête papillon (43) et d'une tige filetée en extrémité (44) venant se loger dans la partie taraudée (41) de la pièce (40), assurant le verrouillage.

4. Équerre selon la revendication 1, **caractérisée en ce que** chacun des éléments (17,18) constitutifs du bras présente une épaisseur supérieure ou égale à celle du corps (1), de façon à former une surface de butée stable permettant le positionnement contre la pièce de bois (50).

5. Équerre selon la revendication 1, **caractérisée en ce que** le repère zéro de l'échelle (5) passe par l'axe de ladite cavité (19) du bras rapporteur (2) lorsque ce dernier est parallèle au premier côté (9), le repère quarante cinq de l'échelle (5) passe par l'axe de ladite cavité (19) du bras rapporteur (2) lorsque ce dernier est parallèle au troisième côté (11).
